# EUROPÄISCHE PATENTSCHRIFT

(11) **EP 2 356 910 B1**
(45) Veröffentlichungstag und Bekanntmachung des Hinweises auf die Patenterteilung: **09.09.2015**
(21) Anmeldenummer: 11000651.7
(22) Anmeldetag: 30.07.2004
(51) Int. Cl.: A23G 3/26, A23P 1/08, A61J 3/00

(54) **Vorrichtung zum kontinuierlichen Beschichten von Kernen mit einer Dragiervorrichtung**
Device for continuous coating of cores with a coating device
Dispositif d'enrobage continu de noyaux à l'aide d'un dispositif de dragéification

(30) Priorität: 01.08.2003 DE 10335411; 28.01.2004 DE 102004004470
(43) Veröffentlichungstag der Anmeldung: 17.08.2011
(62) Teilanmeldung aus: 04763662.6
(73) Patentinhaber: Driam Anlagenbau GmbH, 88097 Eriskirch (DE)
(72) Erfinder: Dunajtschik, Rudolf, 88046 Friedrichshafen (DE); Nohynek, Oliver, 9000 St. Gallen (CH)
(74) Vertreter: Riebling, Peter

(56) Entgegenhaltungen:
- EP-A- 0 185 316
- WO-A-94/18858
- DE-A- 2 129 740
- DE-A- 2 324 946
- DE-A1- 19 518 721
- GB-A- 1 301 810

## Beschreibung

Die Erfindung betrifft eine Vorrichtung zum kontinuierlichen Beschichten von Kernen mit einer Dragiervorrichtung nach dem Oberbegriff des Patentanspruchs 1.

Grundsätzlich werden in der Dragier-Technologie zwei verschiedene Verfahrensformen unterschieden.

Die erste Verfahrensform betrifft ein kontinuierliches Dragierverfahren, bei dem das zu behandelnde Produkt an der Eingangsseite einer drehenden Trommel eingespeist wird und durch drehfest an der Innenwand der Trommel befestigte Förderstege in Richtung auf die Ausgangsseite gefördert wird.

Der sich in der Trommel befindliche Produktstrom wird insgesamt stets mit jeweils einem einzigen Bearbeitungsschritt bearbeitet, wobei mehrere Bearbeitungsschritte zeitlich hintereinanderfolgend ablaufen. Hierbei wird durch Drehen der Trommel das Produkt mit konstanter Förderung von der Einlaufseite zur Auslaufseite gefördert.

Vorteil des bekannten Dragierverfahrens ist ein kontinuierlicher Durchlauf des Produktstromes. Geht es hingegen darum, dass nur relativ geringe Produktmengen behandelt werden sollen, dann ist dieses kontinuierliche Durchlaufverfahren teuer und aufwendig. Außerdem sind die Auftragsmengen bei einem Durchlauf sehr begrenzt.

Bei einem zweiten bekannten Dragierverfahren handelt es sich um eine diskontinuierliche Betriebsweise. Dabei wird eine einzelne Charge in eine Trommel eingeführt und dort einem bestimmten Behandlungsablauf unterworfen. Die Behandlung erfolgt in relativ kleinvolumigen Kesseln. Nach Beendigung des Behandlungsschrittes wird die Charge entleert und in eine weitere Trommel eingeleitet, wo der nächste Behandlungsschritt stattfindet.

Bei dieser schrittweisen Bearbeitung der Charge in verschiedenen, hintereinander Folgend angeordneten, Trommeln ist ein hoher Maschinenaufwand gegeben.

Um die Durchlaufzeiten zu verkürzen ist es bei diesem bekannten Batch-Verarbeitungsverfahren bekannt, mehrere Trommeln am Umfang eines Rundtisches anzuordnen und dem Rundtisch gegenüberliegend eine Anzahl von gehäusefesten Bearbeitungsstationen zuzuordnen.

Die jeweilige Trommel mit der darin lagernden Charge wird dann durch Drehung des Rundtisches unter die jeweilige Bearbeitungsstation gebracht, wo sie einem Behandlungsschritt unterworfen wird.

Nach Beendigung dieses Behandlungsschrittes wird der Rundtisch weitergedreht, und die nächste Trommel kommt in Eingriff mit der zugeordneten Behandlungsstation.

Dieses Stapelverfahren ist besonders dann aufwendig, wenn eine Vielzahl von Bearbeitungsschritten notwendig ist weil eine große Anzahl von Trommeln auf einem Rundtisch angeordnet werden müssen. Vorteil dieses Verfahrens ist jedoch, dass auch kleine Einzelchargen gut bearbeitet werden können.

Mit der Druckschrift DE 23 24 946 A wird eine Vorrichtung zum kontinuierlichen Beschichten von Kernen mit einer drehend angetriebenen Trommel offenbart, welche sich zum Zweck der Längsförderung neigen lässt. In einer Ausführungsform ist die Trommel im Dragierbetrieb in einer weiteren Stellung gelagert.

Mit der DE 195 18 721 As wird ebenfalls eine Vorrichtung zum kontinuierlichen Beschichten von Kernen mit einer drehend angetriebenen Trommel offenbart. Der Innenraum der Trommel ist durch eine Mehrzahl von gegeneinander abgeschotteten Kammern unterteilt, wobei ein Längsförderer zeitweilig vom Förderbetrieb auf Mischbetrieb umschaltbar ist. Die Kammer ist jeweils durch den Trommelmantel und durch zwei voneinander beabstandete, drehfest mit dem Trommelmantel verbundene Trennscheiben gebildet. Die Trennscheiben weisen eine Durchbruch auf, der durch ein betätigbares Verschließlement verschließbar und zu öffnen ist.

Ausgehend von dem oben genannten Stand der Technik liegt der Erfindung die Aufgabe zugrunde, eine Vorrichtung zum kontinuierlichen Beschichten von Kernen mit einer Dragiervorrichtung so weiterzubilden, dass auch relativ kleine Einzelchargen auf engem Raum mit geringem Maschinenaufwand bearbeitet werden können.

Zur Lösung der gestellten Aufgabe ist die Erfindung durch die Vorrichtung nach der technischen Lehre des Anspruchs 1 gekennzeichnet.

Durch die Ausführungsform gemäß der Erfindung besteht der Vorteil, dass ein kontinuierliches Durchlaufverfahren beibehalten werden kann und dennoch es erstmals möglich ist, relativ kleine Einzelchargen individuell in voneinander getrennten Behandlungskammern in der sich drehenden Trommel voneinander abzuteilen und auch individuell zu behandeln.

Der erfindungsgemäßen Ausführungsform liegt zugrunde, dass die Durchlaufbewegung mittels einer von der Drehbewegung der Trommel entkoppelten Wendel realisiert wird. Diese dreht sich so getaktet, dass die Wendel gewährleistet, dass die Produkte in den einzelnen Stationen innerhalb der Röhre beliebig lang verbleiben können und keine ungewünschte Längsbewegung durchgeführt wird. Die Wendel wird nur dann in Bewegung gesetzt, wenn die Produkte einer weiteren Bearbeitungsstation innerhalb der Röhre zugeführt werden sollen.

Die zu behandelnden Produkte rotieren ständig in der sich drehenden Trommel, ohne dass ein Transport in Längsrichtung stattfindet. Erst der in der Trommel angeordnete Längsförderer bringt das Produkt von der einen Behandlungsstation in die nächste.

Vorteil dieser Erfindung ist, dass die Verweilzeit der Produkte beliebig verlängert werden kann und die Beeinflussung des Prozesses viel individueller realisiert werden kann als bei bisherigen konventionellen Dragierröhren, bei denen die Beeinflussung des Prozesses schwierig und nur in engen Grenzen möglich ist.

Es ergeben sich daher folgende Vorteile:
1. Ein von der Drehbewegung der Trommel entkoppelter Längsförderer (z.B. eine Wendel) fördert taktweise das Material in axialer Richtung durch die Trommel. Bevorzugt wird ein derartiger Längsförderer als Transportwendel oder auch als umlaufendes Trum ausgebildet.
2. Je nach Anzahl der Förderglieder des Längsförderers, welche die Bearbeitungsstationen in der Trommel definieren, können beliebig viele Bearbeitungsstationen in der Trommel angeordnet werden.
3. Je nach Abstand der einzelnen Förderglieder zueinander (Steigung der Transportwendel) sind die Bearbeitungsstationen verschiebbar und auch einstellbar.
   Es kann sogar vorgesehen sein, dass die Transportwendel über ihre Länge gesehen unterschiedliche Steigungen aufweist, so dass beispielsweise an der Eingangsseite der Trommel ein relativ breites und großflächiges Bett für die zu behandelnden Kerne in einer Behandlungskammer gebildet wird und mit Förderung dieses Gutes in Richtung auf die Ausgangsseite der Trommel dieses Bett in der Fläche verkleinert wird, wodurch zwangsläufig auch die Schütthöhe vergrößert wird. Damit hat die Transportwendel über ihre Länge gesehen unterschiedliche Steigungen.
4. Es kann vorgesehen sein, mehr als einen in axialer Richtung angetriebenen Längsförderer durch die Trommel laufen zu lassen. Als bevorzugtes Beispiel kann angegeben werden, dass zwei unabhängig drehend angetriebene Transportwendeln in der Trommel vorhanden sind, wobei im Zwischenraum zwischen den beiden Wendeln das von der einen, vorderen Wendel bearbeitete Gut in die Eingangsseite der zweiten, sich daran anschließenden Wendel übergeben wird.
5. Die Trommel wird bevorzugt auf Rollen gelagert und angetrieben.
6. Die Medienzufuhr der Behandlungsmedien ist von beiden Seiten der Trommel her in die einzelnen, individuellen Behandlungskammern innerhalb der Trommel möglich.
7. Es kann vorgesehen sein, dass einige oder mehrere Behandlungsstationen an einem gehäusefesten Schlitten angeordnet sind, der in axialer Richtung zur Trommel bewegbar ist, so dass die Behandlungsstationen in die Trommel hinein und aus der Trommel herausfahrbar ausgebildet sind.
8. Als weiterer Vorteil ist die leichte Reinigung der Trommel zu erwähnen: Dadurch, dass die Transportwendel (als separates Teil) vollständig aus der Trommel entfernt werden kann, ist der Innenraum der Trommel besonders einfach zu reinigen, denn er ist dann frei von Einbauten.
9. Die zu behandelnden Kerne verbleiben bei stillstehender Transportwendel und sich drehender Trommel beliebig lange in der jeweiligen Bearbeitungsstation und werden dort durch die dort angeordneten Bearbeitungsstationen behandelt. Bei sich drehender Trommel erfolgt so eine besonders gründliche Bearbeitung des Gutes in der Bearbeitungsstation. Dies ist ein wesentlicher Vorteil gegenüber der eingangs erwähnten Mischtrommel, bei der pro Drehung der Trommel das Gut zwangsläufig in axialer Richung gefördert wird, ohne dass das Gut an einer Stelle der Trommel länger verbleiben kann.

Mit der gegebenen technischen Lehre wird nun erstmals eine sinnvolle Verbindung zwischen dem kontinuierlichen Durchlaufverfahren und dem Chargenverarbeitungsbetrieb vorgeschlagen.

Der einfacheren Beschreibung wegen wird der vorher beschriebene Längsförderer nun in seiner Ausgestaltung als Transportwendel beschrieben. Dies beschränkt jedoch nicht den Schutzbereich der Erfindung, denn in den Schutzbereich der Erfindung fallen sämtliche bekannten Längsförderer, die in der Lage sind, zwischen den einzelnen Fördergliedern funktionell voneinander getrennte Behandlungskammern für die Aufnahme von Einzelchargen des zu behandelnden Gutes zu bilden.

Gegenüber einer konventionellen, kontinuierlich arbeitenden, Anlage wird demgemäss das Produktbett in mehrere Einzelchargen zerlegt und durchläuft mittels der getakteten Transportwendel die Trommel in Form von mehreren kleinen Chargen. Somit muss die Transportwendel auch unabhängig von dem Drehantrieb des Trommelzylinders gelagert sein. Der Auftrag der einzelnen Überzugsmaterialien erfolgt an dafür frei wählbaren Positionen mit frei wählbarem Mengenauftrag im Bereich der durch die Transportwendel gebildeten einzelnen Behandlungskammern.

An den einzelnen Positionen werden z. B. die Prozess-Schritte "Sprühen", "Einlaufen und Verteilen" und "Abstreuen" durchgeführt.

Wesentlicher Vorteil des neuartigen Verfahrens ist die bessere Beeinflussung des Prozesses der Weichdragierung während des Bearbeitungsablaufes. Während beim bisherigen Prozess teilweise ergänzende Prozess-Schritte manuell getätigt werden mussten, ist die Einstellung des Ablaufs bei dem erfindungsgemäßen Verfahren in viel größeren Bereichen möglich.

Die Trommel sollte möglichst auf einer Rollenlagerung drehbar gelagert sein, und der Antrieb kann entweder über die Rollen oder aus Drehmomenten über eine umlaufende Kette oder einen umlaufenden Zahnriemen erfolgen, der den Außenumfang der Trommel umspannt.

Für die Drehlagerung der Transportwendel werden zwei verschiedene Ausführungsformen vorgeschlagen.

In einer ersten Ausführungsform wird vorgeschlagen, dass das Drehlager der Transportwendel aus einem Lagerstern besteht, der drehbar an der Trommel selbst gelagert ist, so dass stets dafür gesorgt ist, dass die Transportwendel koaxial zur Trommel läuft.

In einer anderen Ausgestaltung kann es jedoch auch vorgesehen sein, dass die Transportwendel drehfest mit einer Welle verbunden ist, welche koaxial zur Trommel verläuft und die Trommel durchsetzt, wobei die Welle auf gehäusefesten Lagern drehbar gelagert ist.

Es ist ein geringer Abstand zwischen dem Außenumfang der Transportwendel und dem Innenumfang der Trommel anzustreben.

Beispielsweise ist bei einem Durchmesser von zu behandelnden Kernen im Bereich zwischen 15 und 20 mm ein Spalt zwischen Trommel und dem Außenumfang der Wendel von etwa 1 mm anzustreben.

Selbstverständlich ist die Erfindung nicht auf die angegebenen Dimensionen beschränkt. Es sollte nur vermieden werden, dass die zu behandelnden Kerne im Spalt zwischen der Trommel und der unabhängig davon gelagerten Transportwendel beschädigt werden.

Es kann auch vorgesehen werden, dass am Außenumfang der Transportwendel Abstreif- oder Dichtungsleisten vorhanden sind, die sich an der Innenseite der Trommel anlegen. Auf diese Weise wird beim Drehantrieb der Transportwendel gleichzeitig noch die Trommel-Innenwandung gereinigt. Derartige Dichtungsleisten können aus Profilleisten, aus einem elastomeren Material, aus Bürstenleisten oder auch aus einem Luftvorhang gebildet sein.

Es kann auch vorgesehen sein, dass die Transportwendel über ihre Länge gesehen in der ersten Hälfte eine kleinere Steigung aufweist, während in der zweiten Hälfte eine größere Steigung vorgesehen ist. Auf diese Weise wird der Transportweg des Produktes beim Drehantrieb der Transportwendel beeinflusst.

Vorstehend wurde ein Verfahren beschrieben, das sich dadurch auszeichnet, dass die Vorteile eines kontinuierlichen Durchlaufverfahrens beibehalten werden und es dennoch möglich ist, relativ kleine Einzelchargen individuell in voneinander getrennten Behandlungskammern in der sich drehenden Trommel voneinander abzuteilen und damit auch individuell zu behandeln.

Die Idee der taktweisen Förderung relativ kleiner Einzelchargen in individuell voneinander abgetrennten Behandlungskammern einer sich drehenden Trommel wird bei dem nachfolgenden Ausführungsbeispiel übernommen. Es wird jedoch in dieser Weiterbildung vorgeschlagen, dass ein Längsförderer dergestalt ausgebildet ist, dass nur bedarfsweise eine Förderung von der einen Kammer in die benachbarte Kammer stattfindet.

Erreicht wird dieses Ziel dadurch, dass erfindungsgemäß eine Längsförderung nur bedarfsweise im Innenraum der Trommel dadurch hergestellt wird, dass die die einzelnen Kammern voneinander abtrennenden und drehfest mit der Trommelwandung verbundenen Trennscheiben bedarfsweise geöffnet werden, um einen Übergang von der einen zur anderen Kammer zu ermöglichen.

Zur Öffnung eines Durchbruches in jeweils einer Trennscheibe wird eine Umschalt- oder Förderklappe verwendet, die sich in die lichte Weite des Mischraumes abdichtend einlegt, so dass das an der Wandung der Trommel entlanggeführte Material aufgrund dieser umgelegten Förderklappe in die nächste Kammer gefördert wird.

Kern der Erfindung ist also, dass nur bedarfsweise eine Längsförderung - für einen bestimmten, definierten Zeitraum - dadurch hergestellt wird, dass die die einzelnen Kammern voneinander abtrennenden Förderscheiben für einen bestimmten Zeitraum als Längsförderer arbeiten.

Mit dieser gegebenen technischen Lehre wird der wesentliche Vorteil erreicht, dass nun nicht mehr eine von der Trommelwandung entkoppelte und unabhängig von der Trommelwand angetriebene Förderwendel verwendet werden, sondern dass fest mit der Trommelwandung verbundene Trennscheiben vorgesehen sind, die parallel und in gegenseitigem Abstand zueinander angeordnet sind und zwischen sich jeweils eine Behandlungskammer bilden.

Nur bei Bedarf - bei Förderung des Produktes von der einen Kammer in die andere - wird ein Durchbruch in der jeweiligen Trennscheibe geöffnet und das Öffnungselement (z. B. eine Umschaltklappe) fördert den in der einen Kammer befindlichen Materialstrom in die benachbarte Kammer, sobald die Trommel eine volle Umdrehung ausgeführt hat.

Mit der Lehre dieser erweiterten Ausführungsform wird ein geringerer Maschinenaufwand benötigt, weil eine von der Trommel unabhängig antreibbare Wendel entfällt.

Es ist lediglich erforderlich, in jeder Trennscheibe einen entsprechenden Durchbruch mit einer den Durchbruch möglichst abdichtend verschließbaren Schwenkklappe vorzusehen.

In der Arbeitsstellung der Trommel, d. h. wenn in jeder einzelnen Kammer eine individuelle Behandlung der Charge stattfindet, ist die Schwenkklappe in Schließstellung und bildet somit eine Wandung der Trennscheibe. Damit ist ein Übergang von der einen Kammer in die andere durch die Trennscheibe hindurch verhindert.

Soll jedoch das Material nach entsprechender individueller Behandlung in der einen Kammer in die nächste Kammer gefördert werden, dann werden alle Schwenkklappen in allen Trennscheiben in ihrer Offenstellung verschwenkt und geben einen Durchbruch in der Trennscheibe frei.

Gleichzeitig wirkt diese Schwenkklappe nun als Längsförderer durch den Durchbruch hindurch. Hierzu ist es vorgesehen, dass die Schwenkklappe die lichte Weite der einzelnen Kammer möglichst abdichtend ausfüllt und hierbei als Ableitklappe das an der Trommelwandung entlang geführte Material durch den Durchbruch hindurch in die nächste Kammer einleitet.

Nachdem auch in der nächsten Kammer die dort befindliche Schwenkklappe in Richtung zur daran angrenzenden, weiteren Kammer geöffnet wurde, wird mit der gleichen Trommelumdrehung auch das Material aus der benachbarten Kammer durch die dort angeordnete Schwenkklappe und den damit geöffneten Durchbruch in wiederum die nächste Kammer gefördert.

Mit einer einzigen Trommelumdrehung und bei Öffnung aller Schwenkklappen werden somit alle Chargen aus allen Kammern um genau einen Takt weiterbefördert und gelangen so in die jeweils in Förderrichtung benachbarte weitere Kammer.

Die am Austragende befindliche Kammer hat ebenso in Richtung auf die Austragseite eine zugeordnete Schwenkklappe, so dass das in dieser, letzten Kammer befindliche Material auf einen Austragförderer gefördert wird. Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Dragiervorrichtung nach der Erfindung mit einem Längsförderer als Transportwendel,
- Figur 2:: schematisiert die Transportwendel unter Weglassung der Trommel
- Figur 3:: eine zweite Ausführungsform eines Längsförderers als umlaufendes Trum,
- Figur 4:: schematisiert die erste Ausführungsform der Dragiervorrichtung,
- Figur 5:: die Stirnansicht einer Dragiervorrichtung nach Figur 4,
- Figur 6:: die gegenüberliegende Stirnansicht der Dragiervorrichtung nach Figur 5,
- Figur 7:: schematisiert die Dragiervorrichtung mit einer ersten Ausführungsform der Lagerung der Transportwendel,
- Figur 8:: die Ausführungsform nach Figur 7 mit Darstellung weiterer Einzelheiten,
- Figur 9:: eine gegenüber Figur 7 abgewandelte Ausführungsform,
- Figur 10:: schematisiert die Darstellung einer Trommel von der Austragseite her gesehen
- Figur 11:: Schnitt durch eine Trommel nach Figur 1
- Figur 12:: die perspektivische Ansicht der einzelnen Kammern und der Weglassung des Trommelmantels im Behandlungsbetrieb
- Figur 13:: die gleiche Darstellung wie Figur 12 im Förderbetrieb
- Figur 14:: schematisiert einen Schnitt durch die Trommel im Förderbetrieb
- Figur 15:: die perspektivische Ansicht einer ersten Ausführungsform des Schwenkantriebes für die Schwenkklappen
- Figur 16:: eine zweite Ausführungsform für den Schwenkantrieb der Schwenkklappen

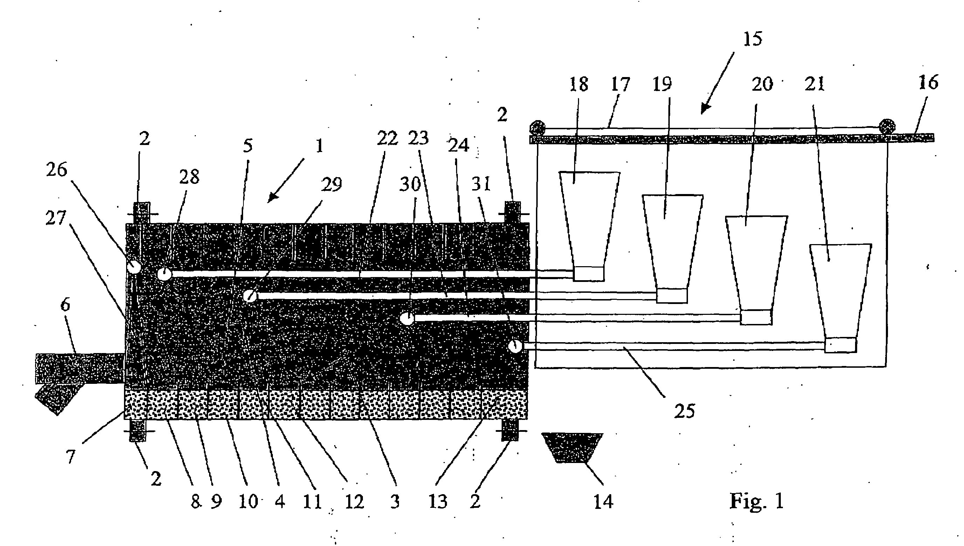

In Figur 1 ist allgemein eine drehend angetriebene Trommel 1 dargestellt, an deren Außenumfang Rollenlager 2 angeordnet sind, welche das Drehlager für die Trommel bilden. Der Drehantrieb der Trommel ist nicht dargestellt.

Lediglich schematisiert ist ein Längsförderer 3 dargestellt, der in Pfeilrichtung 4 das an der Eingangsseite über ein Einführband 6 eingeführte Produkt 5 in einer Anzahl von Einzelchargen aufteilt.

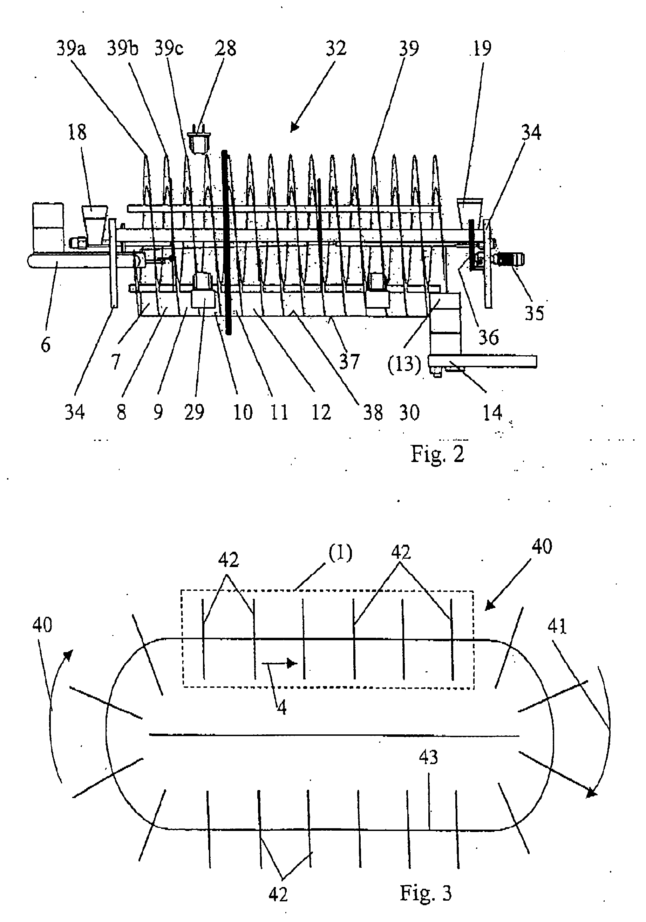

Der Längsförderer 3 ist deshalb nur schematisiert dargestellt, weil nur einzelne, parallel zueinander angeordnete, Förderglieder dargestellt sind. Dies soll versinnbildlichen, dass der Längsförderer 3 entweder als Transportwendel 32 nach Figur 2 oder als umlaufendes Trum (Scheibenförderer 40) nach Figur 3 ausgebildet sein kann.

Es wird im übrigen jede Art von Längsförderer 3 von der Erfindung beansprucht, der in der Lage ist, zwischen seinen Fördergliedern funktionell voneinander getrennte Behandlungskammern 7 - 13 auszubilden.

Das Produkt 5 wird als Einzelcharge über das Einführband 6 in die erste Behandlungskammer 7 eingeführt, wo es beispielsweise mittels eines Sprühkegels 27 von einem Behandlungskopf 26 behandelt wird. Die Trommel 1 dreht sich während der Bearbeitung, während der Längsförderer 3 stillsteht.

Nach Ablauf der erforderlichen Behandlungszeit in der Behandlungskammer 7 wird der Längsförderer 3 (bei stehender oder auch bei drehender) Trommel 1 eingeschaltet und fördert mit seinem Förderglied das in der Behandlungskammer 7 fertig behandelte Produkt in die sich daran anschließende Behandlungskammer 8.

Damit wird die Behandlungskammer 7 frei, und über das Einführband 6 wird eine neue Charge in die Behandlungskammer 7 eingeführt.

In der Behandlungskammer 8 kann das Produkt beispielsweise über den Behandlungskopf 28 einer weiteren Behandlung unterzogen werden, wobei beispielsweise über eine Versorgungsleitung 22, die am Auslauf eines Silobehälters 18 angeordnet ist, eine Überzugsmasse an den Behandlungskopf 28 herangeführt wird.

Die Einzelcharge wird nun in der Behandlungskammer 8 entsprechend weiter bearbeitet, während in der Behandlungskammer 7 die über das Einführband 6 eingespeiste weitere Charge der vorher beschriebenen Behandlung unterzogen wird.

Sind beide Behandlungen in den Behandlungskammern 7 und 8 abgeschlossen, dann wird der Längsförderer wiederum um einen Takt in Pfeilrichtung 4 bewegt, wodurch sich die Vorderglieder in axialer Richtung durch die Trommel 1 verschieben, und das vorher in der Behandlungskammer 8 befindliche Produkt gelangt nun in die sich daran anschließende Behandlungskammer 9. Dort wird das Produkt beispielsweise nur durchgemischt, weil dieser Behandlungskammer 9 kein Behandlungskopf zugeordnet ist.

Gleichzeitig wird über das Einführband 6 wiederum ein neues Produkt in die Behandlungskammer 7 eingefüllt und das vorher in der Behandlungskammer 7 gewesene Produkt wird in die Behandlungskammer 8 gefördert.

Auf diese Weise gelangt jede Einzelcharge taktweise in jede Behandlungskammer 7-13, und in bestimmten Behandlungskammern (z. B. der Behandlungskammer 12 und weiteren erfolgt eine entsprechende weitere Beschichtung oder Behandlung des Produktes mit einem dieser Behandlungskammer zugeordneten Behandlungskopf 29.

Den weiter hinten gelegenen Behandlungskammern sind dann noch weitere Behandlungsköpfe 30, 31 zugeordnet, wobei jeder Behandlungskopf 28 - 31 über eine zugeordnete Versorgungsleitung 22 - 25 mit einem zugeordneten Silobehälter 18-21 verbunden sind.

Nach dem gezeigten Ausführungsbeispiel sind alle Bearbeitungsstationen an einem Fahrwagen 17 angeordnet, der an einem gehäusefesten Gestell 16 verschiebbar gelagert ist. Die gesamte Behandlungsvorrichtung 15 ist damit aus der Trommel 1 heraus fahrbar oder einführbar.

Dank der Verschiebbarkeit der Behandlungsvorrichtung 15 kann somit wahlweise eine Behandlung auch in unterschiedlichen Behandlungskammern stattfinden. Erfolgte jetzt beispielsweise eine Behandlung in den Behandlungskammern 8, 12 und so weiter, kann durch Verschieben der Behandlungsvorrichtung 15 nun eine Behandlung des Produkts in den Behandlungskammern 9 oder 10 mit dem Behandlungskopf 28 stattfinden, während der Behandlungskopf 29 zwei Behandlungskammern weiter nach hinten verschoben wird.

Am Auslauf der Trommel 1 ist in an sich bekannter Weise ein Behälter 14 angeordnet, der das aus der Behandlungskammer 13 herauslaufende Produkt aufnimmt und einer weiteren Bearbeitung zuführt. Der Behälter 14 wird somit taktweise mit der Verschiebung des Längsförderers 3 in Pfeilrichtung 4 befüllt.

Die Figur 2 zeigt als Ausführungsbeispiel für einen derartigen Längsförderer 3, dass dieser nun als Transportwendel 32 ausgebildet ist. Die Transportwendel 32 ist drehfest mit einer mittigen Welle verbunden, welche sich durch die Trommel 1 erstreckt.

Der Übersichtlichkeit wegen ist die Trommel 1 weggelassen. Damit ist dargestellt, dass zwischen den einzelnen Wendelspitzen 39a - c die vorher beschriebenen Behandlungskammern 7-13 und dem Innenumfang der Trommel 1 ausgebildet werden.

Die Welle ist hierbei in zwei außerhalb der Trommel 1 angeordneten Lagern 34 drehbar aufgenommen und wird über einen Antrieb 35 und ein daran angeflanschtes Getriebe 36 drehend angetrieben.

Lediglich als Strich ist der Trommelboden 37 der Trommel 1 zeichnerisch dargestellt.

Zwischen dem Trommelboden 37 und der jeweiligen Wendelspitze 39 ergibt sich somit ein Drehspalt 38.

Die Figur 3 zeigt eine andere Ausführungsform eines Längsförderers 3, der als Scheibenförderer 40 ausgebildet ist.

Die Trommel 1 ist lediglich schematisiert dargestellt, ebenso wie die einzelnen Scheiben 42 des Scheibenförderers 40, die in Pfeilrichtung 4 durch die Trommel 1 hindurch bewegbar sind und die beispielsweise parallel und in gegenseitigem Abstand an einem Verbindungsstrang 43 befestigt sind. Damit ist der Scheibenförderers 40 als umlaufendes Trum ausgebildet, welches in den Pfeilrichtungen 41 umläuft und die jeweiligen Scheiben 42 parallel und in gegenseitigem Abstand durch die Trommeln 1 in Pfeilrichtung 4 hindurchlaufen lässt.

Die Scheiben sind demzufolge nicht drehbar, sondern werden in axialer Richtung durch die Trommel hindurchgeschoben oder-gezogen. Sie müssen nicht den gesamten Durchmesser der Trommel ausfüllen. Es reicht auch aus, jeweils nur eine Halbscheibe oder dgl. zu verwenden, die beispielsweise den unteren Querschnitt der Trommel ausfüllt, um so das dort lagerende Gut zu erfassen und bei Bedarf in die nächst daran anschliessende Behandlungsstation zu befördern.

Diese Ausführung hat den Vorteil, dass die Zuführungen zu den einzelnen Behandlungsstationen durch die obere Hälfte der Trommel durchgeführt werden können.

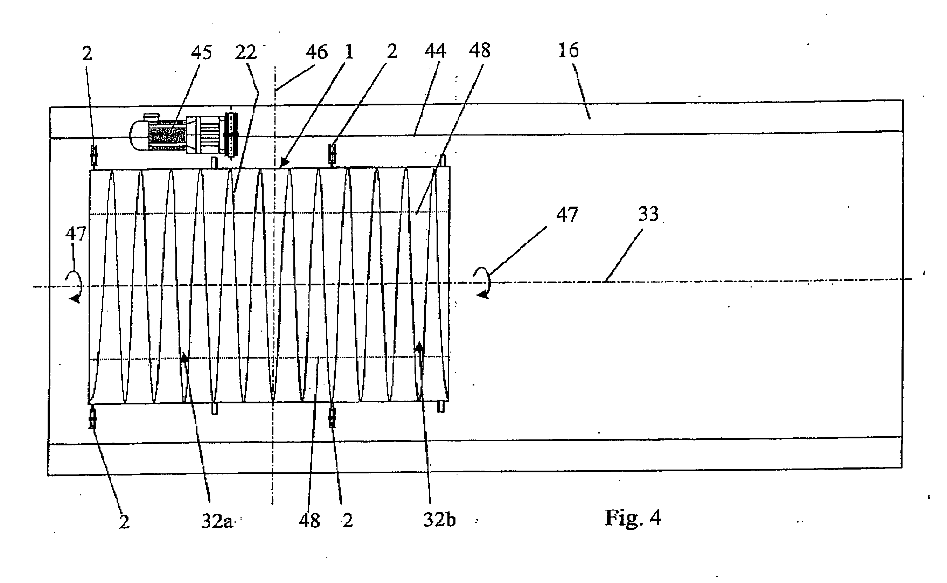

Die Figur 4 zeigt weitere Einzelheiten der Anordnung der Transportwendel 32 in der Trommel 1.

Die gesamte Anordnung ist hierbei in einem Gestell 16 angeordnet, an dem ein oder mehrere Führungsschienen 44 angeordnet sind, an denen ein oder mehrere Verschiebeantriebe 44 für die einzelnen Behandlungsköpfe 28 - 31 vorgesehen sind.

Auf diese Weise kann der jeweilige Behandlungskopf 28 - 31 mittels des Verschiebeantriebes 45 in jede beliebige Behandlungskammer 7 - 13 im Innenraum der Trommel 1 gefahren werden.

Die Welle 33 der Transportwendel 32 wird im Übrigen in Pfeilrichtung 47 angetrieben.

Die Darstellung in Figur 4 zeigt auch schematisiert, dass nicht nur eine Transportwendel vorhanden sein kann, sondern dass auch zwei oder mehrere Transportwendeln 32a, 32b vorhanden sein können.

Beispielsweise erstreckt sich die erste Transportwendel 32a von der Eingangsseite der Trommel 1 bis etwa zum Mittenbereich, dort wo die Teilungsebene 46 angedeutet ist.

Ab dieser Teilungsebene in Richtung zum Auslauf der Trommel schließt sich eine weitere Transportwendel 32b an, wobei die beiden Transportwendeln 32a, 32b jeweils in den Pfeilrichtungen 47 auch mit unterschiedlichem Drehantrieb, unterschiedlicher Geschwindigkeit angetrieben werden können.

Ebenso ist es möglich, die insgesamt durchlaufende Transportwendel 32 oder auch die einzelnen Transportwendeln 32a, 32b mit unterschiedlichen Steigungen der Wendel auszubilden, um so die die Größe der Behandlungskammern im Innenraum der Trommel 1 zu variieren.

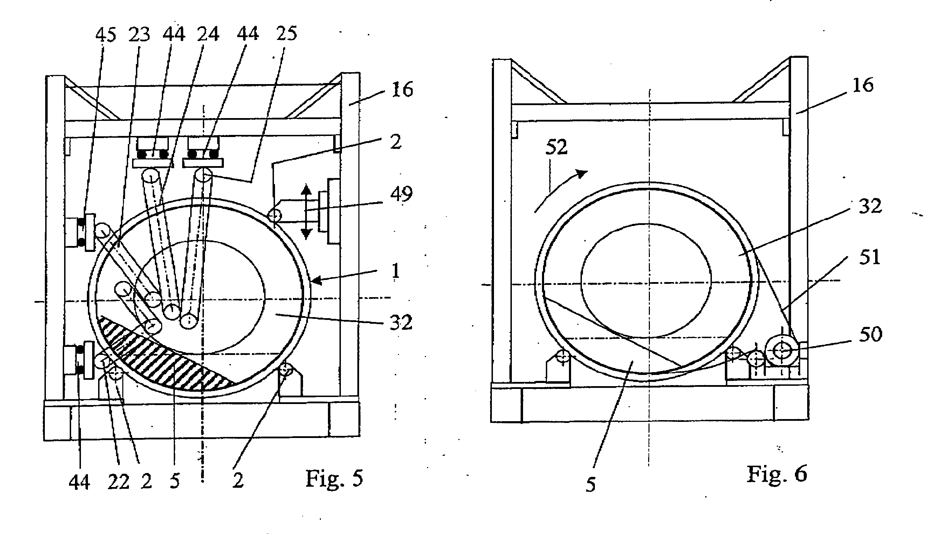

Die Figur 5 zeigt die Auslaufseite der Trommel. Es ist ersichtlich, dass mehrere Führungsschienen 44 mit zugeordneten Verschiebeantrieben 45 vorgesehen sind und die vorher erwähnten Versorgungsleitungen 22 -25 mit den zugeordneten Behandlungsköpfen 28, 31 frei im Innenraum der Trommel 1 verfahrbar sind.

Ebenso ist dargestellt, dass der Außenumfang der Trommel auf den Rollenlagern 2 lagert, wobei ein oberes Rollenlager 2 in den Pfeilrichtungen 49 einstellbar ausgebildet sein kann.

Ebenso ist das sich schräg einstellende Produktbett des Produktes 5 dargestellt, wenn die Trommel beispielsweise in Pfeilrichtung 52 drehend angetrieben ist.

Ein solcher Drehantrieb ist in Figur 6 dargestellt. Er besteht im Wesentlichen aus einem Zahnriemen 51, der über den Außenumfang der Trommel 1 geschlungen ist und der über einen Antriebsmotor 50 und ggf. über ein Getriebe und zugeordnete Spann- und Umlenkrollen führt.

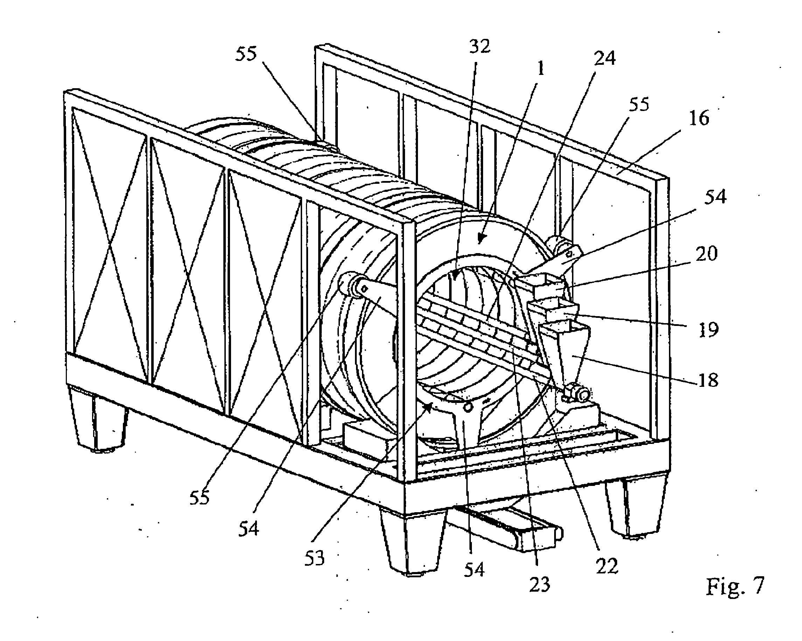

Der Drehantrieb der Transportwendel 32 wird anhand der Figuren 7, 8 und 9 näher dargestellt.

Zunächst zeigt die Figur 4, dass zur gegenseitigen Stabilisierung der einzelnen Wendeln der Transportwendel diese durch etwa in axialer Richtung verlaufende Abstützbleche 48 abgestützt sein können, um die Transportwendel 32 stabil und durchbiegungssicher zu machen.

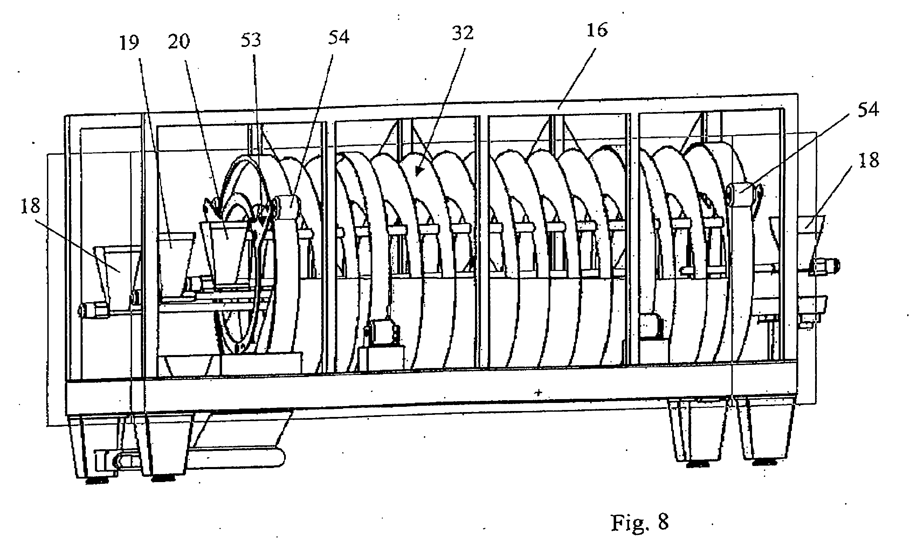

Die Figuren 7 und 8 zeigen, dass - im Gegensatz zur zentralen Lagerung nach Figur 2 - die Transportwendel 32 nun an jeweils einem stirnseitig an der Trommel sich abwälzenden Lagerstern 53 gelagert ist. Der Lagerstern 53 besteht aus drei gleichmäßig am Umfang verteilt angeordneten und radial auswärts gerichteten Armen 54, an deren äußeren, freien Enden jeweils eine Rolle 55 ansetzt, die sich am Außenumfang der Trommel 1 anlegt. Der Lagerstern 53 ist hierbei drehfest mit der Transportwendel 32 verbunden.

Der Vorteil dieser Lagerung ist, dass der Innenraum der Trommel 1 vollkommen von Einbauten (wie beispielsweise der Welle 33) freigehalten wird und dadurch es noch einfacher ist, die Behandlungsvorrichtung 15 mit ihren unterschiedlichen Behandlungsköpfen 28 - 31 im Innenraum der Trommel 1 zu verfahren, um individuell verschiedene Behandlungskammern 7-13 beaufschlagen zu können.

Die Figur 8 zeigt hierbei die Anordnung der Transportwendel, wobei der besseren Übersichtlichkeit halber die Trommel nicht gezeichnet ist.

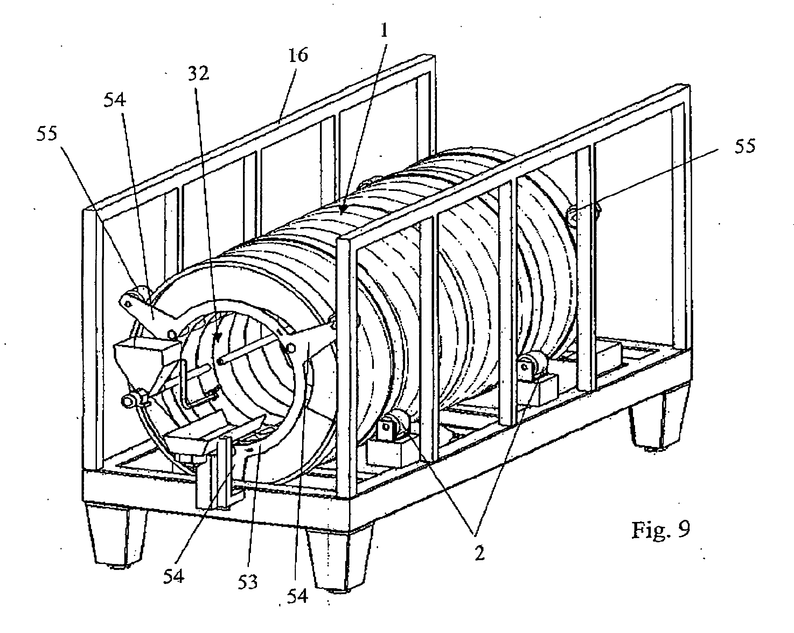

Die Figur 9 zeigt hierbei eine gedrehte perspektivische Ansicht im Vergleich zu Figur 7.

Es gibt auch eine zeichnerisch nicht dargestellte Abweichung zu dem vorher erwähnten Lagerstern 53 mit einer zentralen Lagerung der Transportwendel 32 mit der beschriebenen Welle 33. Die Welle 33 ist hierbei in jeweils stirnseitig angeordneten Lagern 34 aufgenommen, wobei diese Lager 34 an einem gehäusefesten Halter angeordnet sind.

Ebenso sind die der Drehlagerung der Trommel dienenden Rollenlager 2 an einem gehäusefesten Gestell angeordnet.

Es ist selbstverständlich auch möglich, die Förderrichtung des Längsförderers 3 in Pfeilrichtung 4 umzukehren und das Produkt von der Auslaufseite hin in Richtung zur Einlaufseite zu fördern.

Diese Umkehrung der Förderrichtung kann auch während des laufenden Behandlungsprozesses vorgenommen werden.

Ebenso ist es vorgesehen, die Fördergeschwindigkeit zu verändern, wenn dies zwischen einzelnen Bearbeitungsschritten erforderlich ist.

Die Ausbildung des Längsförderers als Transportwendel macht die Anordnung besonders einfach. Die Transportwendel ist leicht auswechselbar und kann gegen andere Transportwendeln (z. B. größerer Steigung) ausgetauscht werden. Auf diese Weise ist es möglich, statt der in Figur 1 dargestellten dreizehn Behandlungskammern nur beispielsweise fünf oder sechs Behandlungskammern zu bilden, die jedoch ein größeres Aufnahmevermögen haben.

Ebenso ist es möglich, durch entsprechende Wahl der Steigung der Transportwendel nur funktionell zwei voneinander getrennte Behandlungskammern in der Trommel auszubilden.

Statt des Drehantriebes der Transportwendel kann auch ein Längsförderer verwendet werden, der einen Verschiebeantrieb ausbildet, so wie es in Figur 3 dargestellt ist.

Nachfolgend wird die erweiterte Ausführung beschrieben, mit der es möglich ist, bedarfsweise den Durchgang durch einzelne Kammern zu öffnen und zu schließen.

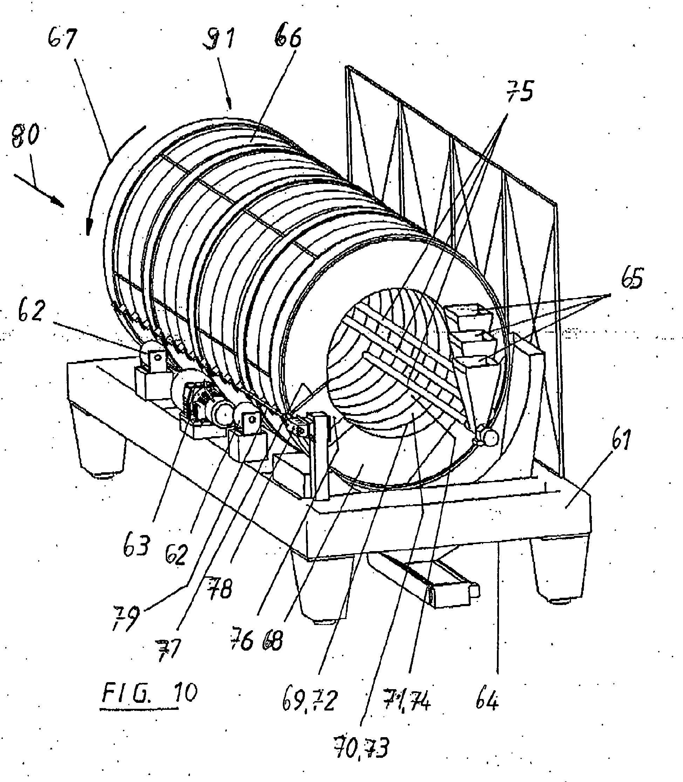

In Figur 10 ist auf einen Maschinenrahmen 61 eine Trommel 91 drehbar gelagert.

Am Trommelmantel 66 liegen von außen eine Anzahl von einem gegenseitigen Abstand voneinander einnehmenden Führungsrollen 62 an. Der Drehantrieb der Trommel 91, beispielsweise in Pfeilrichtung 67, erfolgt über einen Antrieb 63, der mit einer zugeordneten Antriebswalze in Dreheingriff mit einer zugeordneten Laufbahn am Außenumfang des Trommelmantels 66 ist.

In den Trommelinnenraum ragen eine Reihe von Behältern 65, die jeweils mit Rohren 75 verbunden sind.

In den Behältern 65 sind entsprechende Beschichtungsmassen, Flüssigkeiten und andere Substanzen enthalten, die über die Rohre 75 in die einzelnen Kammern 72, 73, 74 zugeführt werden.

Der Innenraum der Trommel 91 ist nämlich in eine Vielzahl von einzelnen, voneinander getrennten Kammern 72 - 74 unterteilt. Dies erfolgt durch Anordnung von Trennscheiben 68, 69, 70, 71, wobei jede Trennscheibe aus einem Kreisring besteht, der fest und abgedichtet mit dem Innenumfang des Trommelmantels 66 verbunden ist.

Die Ebene jeder Trennscheibe 70 ist hierbei bevorzugt senkrecht zum Trommelmantel 66 ausgebildet.

Es ist jedoch auch möglich, dass die Trennscheiben schräg zum Trommelmantel 66 gerichtet sind.

Am Austragsende ist unterhalb der Trommel 91 eine Austragsvorrichtung 64 vorgesehen.

Die Einschleusung des Materials erfolgt in Pfeilrichtung 80 von der gegenüberliegenden Seite der Trommel.

Wichtig ist nun, dass jede Trennscheibe 66 - 71 einen Durchbruch aufweist, der mittels einer Schwenkklappe 76 verschlossen ist. Die Schwenkachse 77 der Schwenkklappe 76 liegt hierbei senkrecht zum Trommelmantel 66.

Es ist ein Schwenkantrieb 78 vorhanden, der eine Schiebestange 79 beaufschlagt, die in Richtung der Längsachse der Trommel 91 verschiebbar ist.

Diese Schiebestange 79 beaufschlagt möglichst alle Schwenkklappen 76, so dass mit diesem Schwenkantrieb 78 alle Schwenkklappen 76 von ihrer Offenstellung in die Schließstellung und umgekehrt gebracht werden können.

Es kann jedoch auch vorgesehen sein, dass mehrere Schwenkantriebe 78 vorhanden sind, weil eine sich über die gesamte Länge der Trommel 91 erstreckende, außenliegende Schiebestange 79, die drehfest mit der Trommel verbunden ist und mit dieser rotiert, nicht möglich ist. Dies daher, dass am Außenmantel der Trommel die Führungsrollen 62 und der Antrieb 63 anliegen. Diese Maschinenelemente würden mit einer sich über die gesamte Länge der Trommel erstreckenden und mitdrehenden Schiebestange 79 kollidieren.

Aus diesem Grund ist vorgesehen, dass mehrere Schiebestangen vorhanden sind, die von einem oder mehreren Schwenkantrieben 78 beaufschlagt werden.

Ebenso ist es möglich, den Schwenkantrieb 78 aller Schwenkklappen 76 pneumatisch, hydraulisch oder fluidisch zu betätigen, wodurch auf eine Schiebestange 79 verzichtet werden kann.

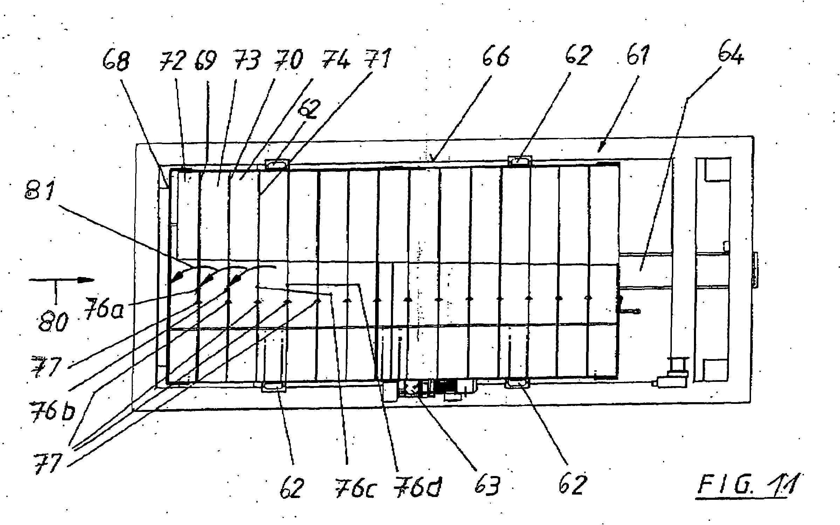

Nachdem in Figur 10 die Austragsseite der Trommel 91 dargestellt ist, sind auch die dortigen Kammern 72-74 gezeigt. Nachdem aber in der Trommel eine Vielzahl weiterer Kammern vorhanden sind, die alle ebenfalls durch Trennscheiben 68-71 voneinander abgegrenzt sind, werden in der Darstellung der Figur 11 die Kammern 72-74 an der Eintragsseite näher beschrieben.

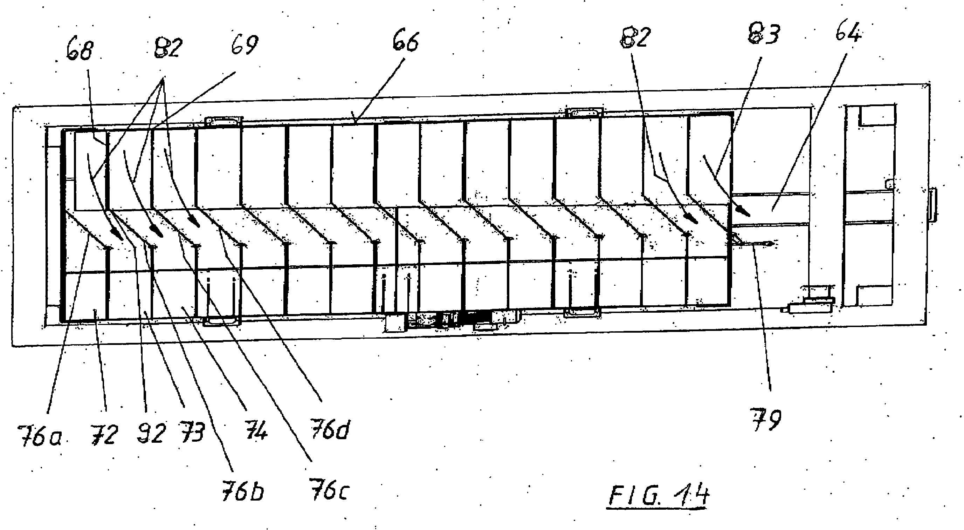

Zur Behandlung einer ersten Charge wird diese in Pfeilrichtung 80 über eine geeignete Eintragsvorrichtung in die erste, an der Eintragsseite befindliche Kammer 72 eingeschleust. Es findet in dieser Kammer eine beliebige Behandlung dieser Charge statt. Ist die Behandlungszeit abgelaufen, werden schlagartig alle Schwenkklappen 76a, b, c, d in Pfeilrichtung 81 verschwenkt, wodurch sich der Zustand nach Figur 14 ergibt.

Dies bedeutet, dass sich jede Schwenkklappe 76 mit ihrem freien schwenkbaren Ende in die lichte Weite der jeweiligen Kammer 72-74 verlegt, so dass bei weiterer Drehung der Trommel kein Material mehr über die Schwenkklappe 76 hinausgelangen und in der gleichen Kammer verbleiben kann.

Vielmehr wirkt jede Schwenkklappe 76a, b, c, d als Umlenkelement, so dass die vorher in der Kammer 72 befindliche Charge nun in Pfeilrichtung 82 über die geöffnete Schwenkklappe 76a in die nächste Kammer 73 geleitet wird.

Diese Überleitung erfolgt genau im Bereich einer einzigen Trommelumdrehung.

Nach einer vollen Trommelumdrehung werden deshalb die Schwenkklappen 76a-d wieder geschlossen, und es wird der Arbeitszustand nach Figur 11 hergestellt.

In die nun leere Kammer 72 wird in Pfeilrichtung 80 eine neue Charge eingeführt, während in der Kammer 73 die vorher in der Kammer 72 behandelte Charge nun weiterbehandelt wird.

Nach einer beliebigen Behandlungszeit werden wiederum alle Schwenkklappen 76 synchron geöffnet, um in die in Figur 14 dargestellte Schwenklage zu gelangen.

Die nun in der Kammer 73 behandelte Charge wird über die Schwenkklappe 76b in die Kammer 74 übergeleitet und die vorher in der Kammer 72 befindliche Charge wird über die Schwenkklappe 76a in die nun leere Kammer 73 übergeleitet.

Danach werden alle Schwenkklappen 76 wieder geschlossen, um einen neuen Arbeitszyklus nach Figur 11 vorzunehmen.

Am Schluss aller Behandlungsschritte befindet sich die letzte Charge, in der letzten, an der Austragsseite befindlichen Kammer und wird dort in Pfeilrichtung 83 auf eine Austragsvorrichtung ausgeleitet.

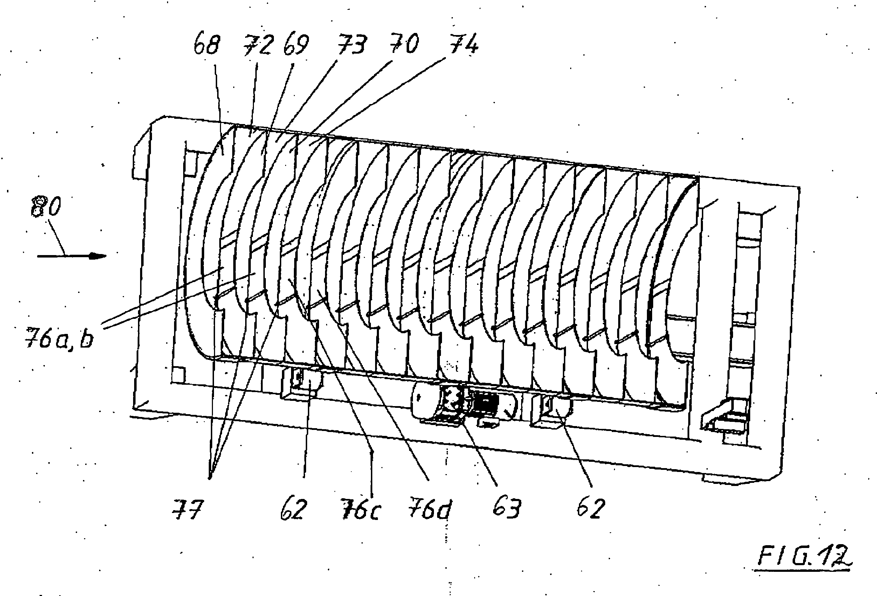

Die Figur 12 zeigt in perspektivischer Darstellung die einzelnen Trennscheiben 68-71, wobei der Vereinfachung wegen der Trommelmantel selbst weggelassen ist. Die Trennscheiben 68-71 sind jedoch mit ihrem Außenumfang drehfest und abgedichtet mit der Innenseite des Trommelmantels 66 verbunden.

Aus der Darstellung in Figur 12 wird deutlich, dass die Schwenkklappen 66a-d fluchtend und bündig in der jeweiligen Trennscheibe 68-71 eingesetzt sind und den dort gebildeten Durchbruch abgedichtet verschließen.

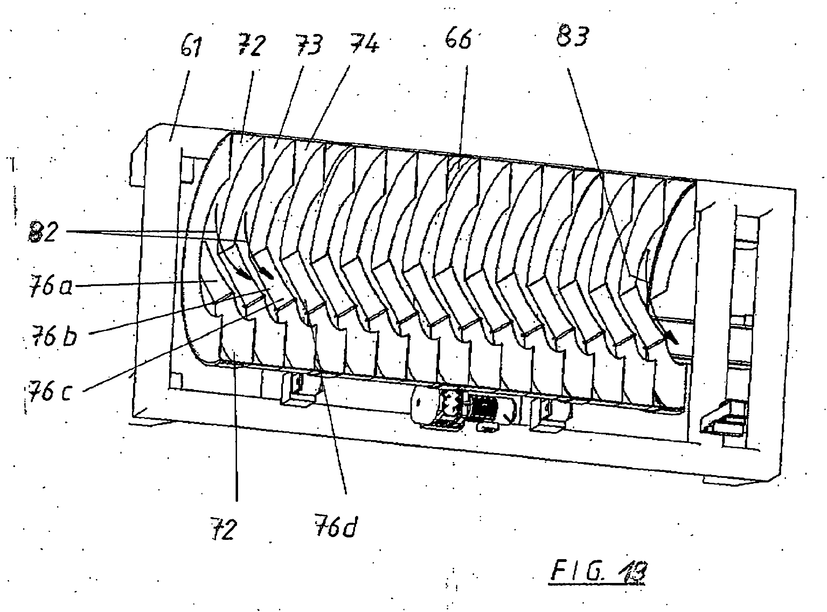

Die Figur 13 zeigt den Förderbetrieb, wenn die einzelnen Schwenkklappen 76a-d geöffnet sind und eine Überleitung über die jeweils geöffnete Schwenkklappe in die nächste, benachbarte Kammer stattfindet.

Hierbei ist wichtig, dass die geöffnete Schwenkklappe 76 jeweils die lichte Weite der Kammer 72-74 abdeckt und sich möglichst abdichtend an der Trommelwand anlegt, um zu vermeiden, dass Material in der jeweiligen Kammer 72-74 verbleibt. Es soll nämlich restlos in die benachbarte Kammer über die geöffnete Schwenkklappe 76 gefördert werden.

Dies zeigt auch die Figur 14, aus der ersichtlich ist, dass sich beispielsweise die Schwenkklappe 66b, welche der Trennscheibe 69 zugeordnet ist, sich mit ihrem freien, schwenkbaren Ende 92 abdichtend an der Innenseite der Trennscheibe 68 anlegt, um so einen vollständigen Materialübergang von der Kammer 73 in die Kammer 74 zu erreichen.

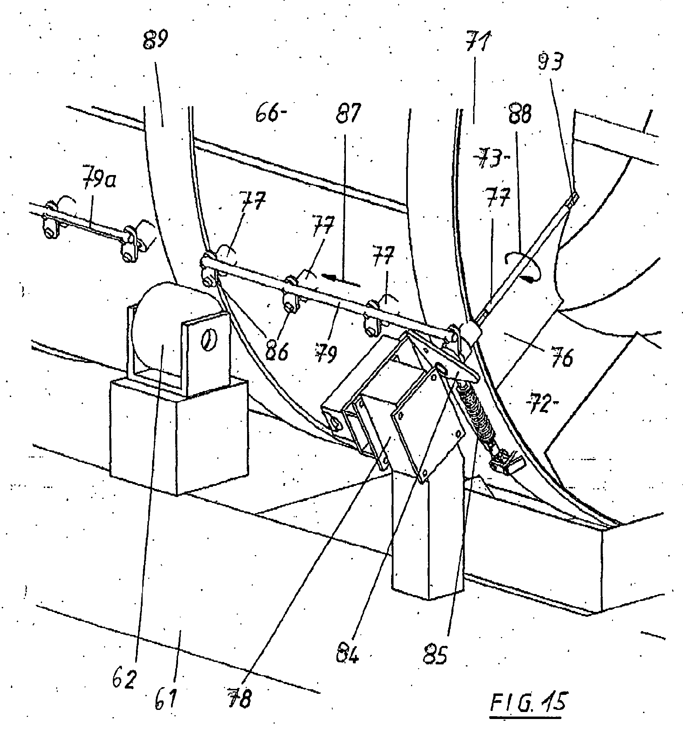

Die Figur 15 zeigt ein erstes Ausführungsbeispiel für den Schwenkantrieb der jeweiligen Schwenkklappen.

Hierbei ist erkennbar, dass jeder Schwenkklappe 76 eine Welle 93 zugeordnet ist, welche die Schwenkachse 77 bildet und die beispielsweise in Pfeilrichtung 88 verschwenkbar ausgebildet ist.

Das freie Ende dieser Welle 93 durchsetzt den Trommelmantel 66 und ist drehfest mit dem freien Ende eines Excenterhebels 86 verbunden. Dessen anderes Ende ist mit der Schiebestange 79 verbunden.

Der in Längsrichtung weisende Antrieb der Schiebestange 79 in Pfeilrichtung 87 wird durch einen Umlenkhebel 84 bewirkt, der mit einer Feder 85 in einer bestimmten Stellung vorgespannt ist.

Über einen nicht näher dargestellten Umschaltnocken wird der Umlenkhebel 84 schlagartig umgelegt, so dass die Schiebestange 79 in Pfeilrichtung 87 verschoben wird und hiermit alle Schwenkklappen 76 von der Schließstellung in die Offenstellung verschwenkt werden.

Die gleiche Beschreibung gilt für die benachbarte Schiebestange 79a, der wiederum ein eigener Schwenkantrieb zugeordnet ist.

Die Figur 15 zeigt, dass die Schiebestangen 79, 79a im Bereich der Laufbahn 89 für die Führungsrolle 62 unterbrochen sein müssen, weil sie mit der Trommel mitrotieren.

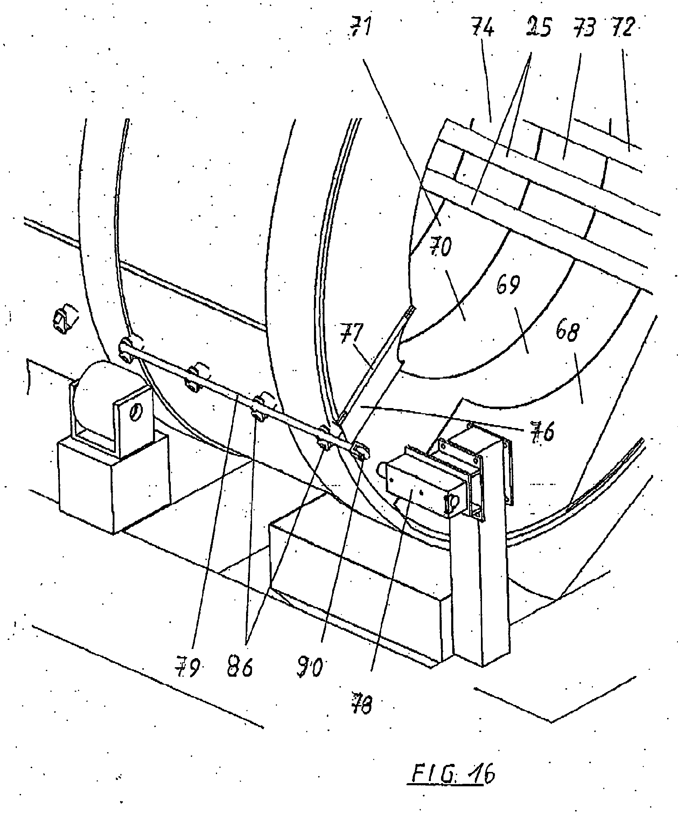

Die Figur 16 zeigt als weiteres Ausführungsbeispiel für den Verschiebeantrieb 78, dass am vorderen freien Ende der Schiebestange 79 eine Abdrückrolle 90 angeordnet ist, die mit einem zugeordneten Stößel in dem Schwenkantrieb 78 zusammenwirkt.

In einer dritten, nicht zeichnerisch dargestellten Ausführungsform, kann es vorgesehen sein, dass eine Zwangssteuerung für die Verschiebung der Schiebestangen 79, 79a dergestalt vorgesehen ist, dass diese an eine ortsfesten Kurve vorbei laufen, die bedarfsweise die Schiebestange in die eine und in die andere Stellung verschiebt.

Wichtig bei allen Ausführungsformen ist, dass eine vollständig abgeschottete, individuelle Behandlung der einzelnen Chargen in den voneinander abgetrennten Kammern 72-74 stattfindet und dass nur bei Bedarf eine Förderung des Materials von der einen zur benachbarten Kammer stattfindet.

### Zeichnungs-Legende

- 1.: Trommel
- 2.: Rollenlager
- 3.: Längsförderer
- 4.: Pfeilrichtung
- 5.: Produkt
- 6.: Einführband
- 7.: Behandlungskammer
- 8.: Behandlungskammer
- 9.: Behandlungskammer
- 10.: Behandlungskammer
- 11.: Behandlungskammer
- 12.: Behandlungskammer
- 13.: Behandlungskammer
- 14.: Behälter
- 15.: Behandlungsvorrichtung
- 16.: Gestell
- 17.: Fahrwagen
- 18.: Silobehälter
- 19.: Silobehälter
- 20.: Silobehälter
- 21.: Silobehälter
- 22.: Versorgungsleitung
- 23.: Versorgungsleitung
- 24.: Versorgungsleitung
- 25.: Versorgungsleitung
- 26.: Behandlungskopf
- 27.: Sprühkegel
- 28.: Behandlungskopf
- 29.: Behandlungskopf
- 30.: Behandlungskopf
- 31.: Behandlungskopf

- 32.: Transportwendel 32a, 32b
- 33.: Welle
- 34.: Lager
- 35.: Antrieb
- 36.: Getriebe
- 37.: Trommelboden
- 38.: Drehspalt
- 39.: Wendelspitze 39a- e
- 40.: Scheibenförderer
- 41.: Pfeilrichtung
- 42.: Scheibe
- 43.: Verbindungsstrang
- 44.: Führungsschiene
- 45.: Verschiebeantrieb
- 46.: Teilungsebene
- 47.: Pfeilrichtung
- 48.: Abstützblech
- 49.: Einstellrichtung
- 50.: Antriebsmotor
- 51.: Zahnriemen
- 52.: Pfeilrichtung
- 53.: Lagerstern
- 54.: Arm
- 55.: Rolle
- 56.: Gestell
- 57.: Halter
- 58.:
- 59.:
- 60.:
- 61.: Maschinenrahmen
- 62.: Führungsrolle
- 63.: Antrieb
- 64.: Austragsvorrichtung
- 65.: Behälter
- 66.: Trommelwand
- 67.: Pfeilrichtung
- 68.: Trennscheibe
- 69.: " "
- 70.: " "
- 71.: " "
- 72.: Kammer
- 73.: " "
- 74.: " "
- 75.: Rohr
- 76.: Schwenkklappe
- 77.: Schwenkachse
- 78.: Schwenkantrieb
- 79.: Schiebestange 79a
- 80.: Pfeilrichtung
- 81.: " "

- 82.: " "
- 83.: " "
- 84.: Umlenkhebel
- 85.: Feder
- 86.: Exzenterhebel
- 87.: Pfeilrichtung
- 88.: " "
- 89.: Laufbahn
- 90.: Abdrückrolle
- 91.: Trommel
- 92.: Ende
- 93.: Welle

## Patentansprüche

1. Vorrichtung zum kontinuierlichen Beschichten von Kernen mit einer Dragiervorrichtung, die aus mindestens einer drehend angetriebenen Trommel (91) besteht, in der ein Produkt (5) mit einer oder mehreren Überzugsmassen beschichtet oder anderen Behandlungsvorgängen unterzogen wird, wie zum Beispiel Sprühen, Trocknen und dgl., wobei der Innenraum der Trommel (91) in eine Mehrzahl von gegeneinander abgeschotteten Kammern (72-74) unterteilt ist, wobei der Längsförderer zeitweilig von Förderbetrieb auf Mischbetrieb umschaltbar ist, dadurch dass bedarfsweise ein Übergang von der einen Kammer (72-74) zur benachbarten, anderen Kammer (72-74) mit einer Förderung des Produktes (5) gebildet ist, wobei die Kammer (72-74) jeweils durch den Trommelmantel (66) und durch zwei voneinander beabstandete, drehfest mit dem Trommelmantel (66) verbundene Trennscheiben (68-71) gebildet ist, welche jeweils einen Durchbruch aufweisen, der durch ein mittels Antrieb (78) betätigbares Verschließelement (76) verschließbar und zu öffnen ist, **dadurch gekennzeichnet, dass** als Verschließelement (76) in der Trennscheibe (68-71) mindestens eine Schwenkklappe (76) angeordnet ist, deren Schwenkachse (77) etwa senkrecht zur Ebene des Trommelmantels (66) ausgerichtet ist, deren freies verschwenkbares Ende an der benachbarten Trennscheibe (68-71) anlegbar ist, wodurch die Schwenkklappe (76) als Ableitklappe und Längsförderer des Produktes (5) durch den Durchbruch hindurch wirkt.

2. Vorrichtung nach Anspruch 1, **dadurch gekennzeichnet, dass** jeder Kammer (72-74) der Trommel (91) eine verschwenkbare Klappe (76a-76d) zugeordnet ist und dass alle Klappen (76a-76d) gemeinsam verschwenkbar sind.

3. Vorrichtung nach einem der Ansprüche 1 oder 2, **dadurch gekennzeichnet, dass** der Antrieb (78) ein Verschiebeantrieb ist, der aus einer parallel zur Längsachse der Trommel (91) angeordneten Schiebestange (79) besteht, die verschiebbar am Trommelmantel (66) geführt ist und die drehfest mit dem einen Ende von jeweils einem Exzenterhebel (86) verbunden ist, dessen anderes Ende drehfest mit der Schwenkachse (77) bzw. Welle (93) der Schwenkklappe (76) verbunden ist.

## Claims

1. Device for continuous coating of cores with a dragee making device which consists of at least one drum (91) which is driven in rotation and in which a product (5) is coated with one or more coating substances or subjected to other treating operations, such as for example spraying, drying and the like, wherein the interior of the drum (91) is subdivided into a plurality of chambers (72-74) which are partitioned off from one another, wherein the longitudinal conveyor can be switched from time to time from conveying operating mode to mixing operating mode in that when necessary a transfer passage is formed from one chamber (72-74) to another neighbouring chamber (72-74) with conveyance of the product (5), wherein the chamber (72-74) is in each case formed by the drum casing (66) and by two separating plates (68-71) which are spaced one from the other and connected to the drum casing (66) so that they cannot turn and each exhibit an opening which can be opened and closed by a closing element (76) which can be actuated by means of a drive (78), **characterised in that** at least one swivelling flap (76) is arranged as closing element (76) in the separating plate (68-71) and the swivelling axis (77) of which is aligned roughly perpendicular to the plane of the drum casing (66) and the free swivelling end of which can be applied to the neighbouring separating plate (68-71), through which the swivelling flap (76) acts as diverting flap and longitudinal conveyor of the product (5) through the opening.

2. Device according to claim 1, **characterised in that** each chamber (72-74) of the drum (91) has an associated swivelling flap (76a-76d) and **in that** all the flaps (76a-76d) are able to swivel together.

3. Device according to one of claims 1 or 2, **characterised in that** the drive (78) is a sliding drive which consists of a slide rod (79) which is arranged parallel to the longitudinal axis of the drum (91) and is guided displaceably on the drum casing (66) and connected so that it cannot turn to one end of in each case an eccentric lever (86) the other end of which is connected so that it cannot turn to the swivel (77) or shaft (93) of the swivelling flap (76).

## Revendications

1. Dispositif pour l'enrobage continu de noyaux à l'aide d'un dispositif de dragéification qui se compose d'au moins un tambour (91) entraîné en rotation dans lequel un produit (5) est recouvert d'un ou plusieurs enrobages ou est soumis à d'autres opérations de traitement comme par exemple une vaporisation, un séchage et autres, étant précisé que l'intérieur du tambour (91) est divisé en plusieurs chambres (72-74) étanches les unes par rapport aux autres, étant précisé que le convoyeur longitudinal est apte à passer temporairement d'un mode de convoyeur à un mode de mélangeur grâce au fait qu'au besoin est formé un passage d'une chambre (72-74) à l'autre chambre (72-74), voisine, avec un transport du produit (5), étant précisé que chaque chambre (72-74) est formée par l'enveloppe de tambour (66) et par deux plaques de séparation (68-71) qui sont espacées l'une de l'autre et reliées, fixes en rotation, à l'enveloppe de tambour (66), et qui présentent chacune une ouverture apte à être ouverte et fermée par un élément de fermeture (76) apte à être actionné à l'aide d'un entraînement (78), **caractérisé en ce qu'**il est prévu comme élément de fermeture (76) dans la plaque de séparation (68-71) au moins un volet pivotant (76) dont l'axe de pivotement (77) est orienté à peu près perpendiculairement au plan de l'enveloppe de tambour (68), et dont l'extrémité pivotante libre est apte à être appliquée contre la plaque de séparation (68-71) voisine, moyennant quoi le volet pivotant (76) agit comme volet de déviation et de convoyeur longitudinal du produit (5) à travers l'ouverture.

2. Dispositif selon la revendication 1, **caractérisé en ce qu'**à chaque chambre (72-74) du tambour (91) est associé un volet apte à pivoter (76a-76d), et **en ce que** tous les volets (76a-76d) sont aptes à pivoter conjointement.

3. Dispositif selon l'une des revendications 1 ou 2, **caractérisé en ce que** l'entraînement (78) est un entraînement coulissant qui se compose d'une barre coulissante (79) qui est disposée parallèlement à l'axe longitudinal du tambour (91), qui est guidée coulissante sur l'enveloppe de tambour (66) et qui est reliée, fixe en rotation, à une extrémité d'un levier excentrique (86) dont l'autre extrémité est reliée, fixe en rotation, à l'axe de pivotement (77) ou à l'axe (93) du volet pivotant (76).
